## Europäisches Patentamt

## European Patent Office

## Office européen des brevets

(19)

(11) Numéro de publication: **0 041 462**
**B1**

(12)

# FASCICULE DE BREVET EUROPEEN

(45) Date de publication du fascicule du brevet:
**29.08.84**

(51) Int. Cl.³: **E 04 B 1/346,** E 04 B 1/00,
E 02 D 27/32, E 02 D 35/00

(21) Numéro de dépôt: **81400886.8**

(22) Date de dépôt: **03.06.81**

(54) **Procédé pour la construction d'une maison à assise hydraulique et maison s'y rapportant.**

(30) Priorité: **04.06.80 FR 8012378**

(43) Date de publication de la demande:
**09.12.81 Bulletin 81/49**

(45) Mention de la délivrance du brevet:
**29.08.84 Bulletin 84/35**

(84) Etats contractants désignés:
**AT BE DE GB IT NL**

(56) Documents cités:
**FR - A - 1 515 726**
**FR - A - 2 276 433**
**FR - A - 2 385 861**
**US - A - 3 075 654**
**US - A - 3 144 903**

(73) Titulaire: **Charles, Gérard, 36, Rue du Ranelagh,**
**F-75016 Paris (FR)**

(72) Inventeur: **Charles, Gérard, 36, Rue du Ranelagh,**
**F-75016 Paris (FR)**

BUNDESDRUCKEREI BERLIN

**Description**

La présente invention concerne un procédé pour la construction d'une maison à assise hydraulique notamment sur un terrain de mauvaise qualité l'invention vise également une maison construitenotamment selon le procédé de construction précité.

On sait que le soubassement d'une maison doit reposer sur un sol suffisamment stable pour éviter tout risque de fissuration du gros-oeuvre de cette maison.

Lorsque le terrain est de mauvaise qualité, par exemple lorsqu'il est marécageux, ou remblayé par une terre d'apport non suffisamment tassée ou hétérogène, il est nécessaire de construire la maison sur des fondations trés lourdes et profondément ancrées dans le sol pour éviter tout risque de fissuration de la construction dû à des tassements différentiels du sol.

Dans certains cas, de telles fondations comprennent des piles de béton enfoncées dans le sol par battage.

Dans tous les cas, de telles fondations ont une incidence trés importante sur le coût total de la construction. De telles fondations en particulier ne sont pas compatibles avec la construction de maisons individuelles économiques.

Le brevet FR-A-2 385 861 décrit une maison sphérique flottant dans une cuvette hemisphérique. Mais la construction d'une telle cuvette et d'une telle maison est particulièrement complexe.

Le but de la présente invention est de fournir un procédé permettant de construire une maison en toute sécurité sur n'importe quel terrain y compris ceux de médiocre qualité.

Ce procédé utilise des moyens simples et peu onéreux et évite la construction de fondations lourdes et/ou solidement ancrées dans le sol.

Dans le procédé visé par l'invention, on creuse dans le sol une cuvette pour recevoir le soubassement de la maison, on applique sur la surface de cette cuvette un revêtement étanche, on coule directement dans la cuvette ainsi revêtue un radier en béton armé, destiné à constituer le soubassement de la maison. Suivant l'invention ce procédé est caractérisé par les étapes suivantes:

— on construit le radier sans l'aide d'aucun coffrage, la cuvette étanche en tenant lieu, et
— on démoule ce radier en introduisant de l'eau dans le fond de la cuvette en une quantité au moins suffisante pour faire flotter le radier, après quoi on construit les murs et le reste de la maison sur ce radier.

Ainsi la maison est construite sur un radier qui ne repose pas directement sur le sol mais qui flotte dans le liquide contenu dans la cuvette étanche, grâce à la poussée d'archimède exercée par ce liquide.

De ce fait, le sol dans lequel est creusée la cuvette n'est soumis qu'à la pression exercée par le liquide qui ne dépasse généralement pas quelques milliers de pascals.

De plus, cette pression est uniformément répartie sur la surface du sol, de sorte que cette dernière ne peut subir de tassements différentiels susceptibles d'engendrer des fissures dans le radier et/ou le gros-oeuvre de la maison.

Ainsi, la construction peut être réalisée sur n'importe quel sol, même de mauvaise qualité, tel qu'un sol marécageux ou remblayé par un apport de terre non tassée.

Selon l'invention, on construit le radier au moyen de béton coulé dans la cuvette, cette dernière servant de coffrage et on démoule ce radier de la cuvette en introduisant de l'eau dans le fond de cette cuvette.

Le radier est ainsi moulé sur place dans la cuvette même, ce qui évite l'utilisation d'un moule séparé et coûteux ainsi que les opérations subséquentes de démoulage, de transport et de mise en place dans la cuvette.

L'invention vise également une maison construite selon le procédé précité.

Suivant l'invention, cette maison comporte un soubassement engagé dans une cuvette creusée dans le sol, cette cuvette comporte un revêtement étanche. Cette maison est caractérisée en ce que le soubassement de la maison est constitué par un radier qui flotte dans de l'eau introduite dans cette cuvette, pour d'émouler le radier en béton qui a été coulé directement dans la cuvette.

Selon une réalisation avantageuse de la maison conforme à l'invention, la cuvette a une forme de révolution autour d'un axe perpendiculaire à son fond, le radier présentant une forme complémentaire de cette dernière et des moyens étant prévus pour faire tourner le radier relativement à la cuvette autour de l'axe de révolution précité.

Le fait de pouvoir faire tourner le radier autour de l'axe de révolution de la cuvette présente les deux avantages suivants:

— lors de la construction des murs de la maison sur ce radier, il est possible de fairetourner l'ensemble, ce qui permet l'utilisations d'appareils fixes projetant en continu une matière pour former les murs de la maison,
— d'autre part, lorsque la maison est équipée de capteurs solaires recouvrant par exemple une partie du toit, il est possible de faire tourner la maison de façon que les capteurs soient toujours dirigés vers le soleil, entre son lever et son coucher. On obtient ainsi un rendement optimal du dispositif de chauffage solaire comprenant de tels capteurs.

D'autres particularités et avantages de l'invention apparaîtront encore dans la description ci-après.

Aux dessins annexés donnés à titre d'exemples non limitatifs:

la fig. 1 est une vue en élévation d'une maison conforme à l'invention, avec coupe longitudinale paritelle de sa partie inférieure,

la fig. 2 est une vue en coupe suivant le plan II-II de la fig. 1,

la fig. 3 est une vue en coupe longitudinale de la cuvette creusée dans le sol et destinée à recevoir le radier de la maison,

la fig. 4 est une vue à plus grande échelle du détail IV de la fig. 3,

la fig. 5 est une vue en coupe longitudinale, analogue à la fig. 3, montrant le radier formé dans la cuvette,

la fig. 6 est une vue à plus grande échelle du détail VI de la fig. 5,

la fig. 7 est une vue analogue à la fig. 5, montrant la flottation du radier dans la cuvette après introduction d'eau dans cette dernière.

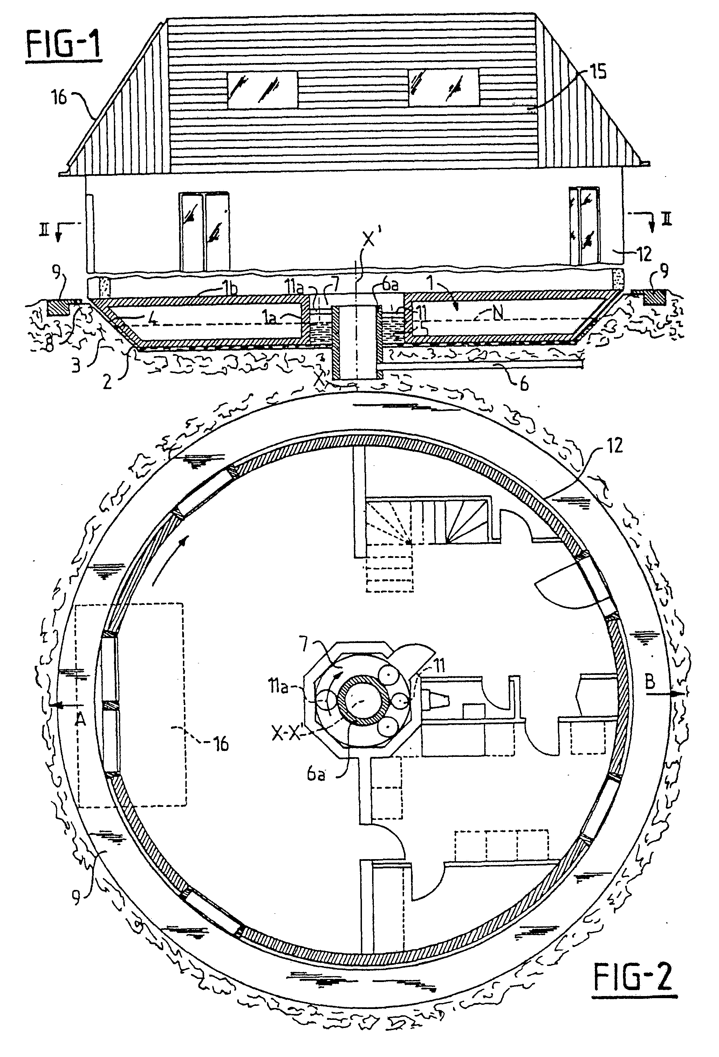

Dans la réalisation des fig. 1 et 2, la maison est construite sur un radier 1 engagé dans une cuvette 2 creusée dans le sol 3. La cuvette 2 présente une forme tronconique complémentaire de celle du radier 1. Cette cuvette 2 est rendue étanche par rapport au sol 3 par un revêtement en matière plastique 4 appliqué directement sur la surface de ce sol 3.

Le radier 1 flotte dans de l'eau 5 qui est introduite dans la cuvette 2 par une conduite d'admission 6 qui débouche dans cette cuvette 2 par le fond de cette dernière et suivant l'axe X-X' de ce fond.

Le radier 1 présente une forme de révolution autour de l'axe X-X', de telle sorte qu'il est possible de faire tourner l'ensemble de la maison autour de cet axe.

Le radier 1 est un corps creux en béton armé. Il présente en son centre un évidemment cylindrique 7 qui traverse ce radier 1 de part en part. La conduite d'admission d'eau 6 débouche dans cet évidemment 7 et son extrémité 6a se situe à un niveau supérieur au niveau N de l'eau 5 contenue dans la cuvette 2.

Pour construire la maison que l'on vient de décrire, on procédé comme suit:

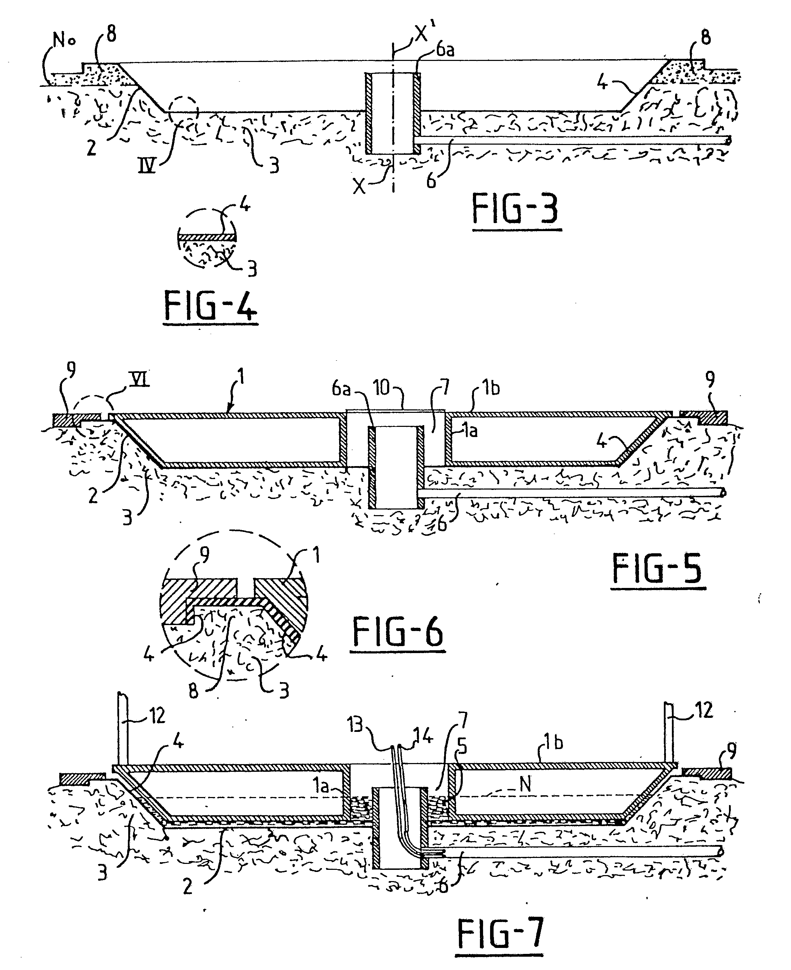

— on creuse une cuvette tronconique 2 directement dans le sol 3 (voir fig. 3). La profondeur de cette cuvette 2 par rapport au niveau initial $N_0$ du sol 3 est calculée de façon que le volume des déblais soit sensiblement égal au volume du remblai 8 placé sur la périphérie de la cuvette 2. La surface du sol de la cuvette 2 ainsi creusée est ensuite égalisée sommairement. Il est en particulier inutile de tasser ce sol.

— On pose ensuite la conduite d'admission d'eau 6 en s'assurant que la partie verticale 6a de cette conduite soit sensiblement centrée sur l'axe X-X' de la cuvette 2. La partie verticale de la conduite d'eau 6 sert d'axe tangible à un gabarit utilisé pour régulariser le profil circulaire de la cuvette 2.

— On recouvre la cuvette 2 par une feuille de matière plastique étanche 4 (voir fig. 4) telle que du caoutchouc butyl. On ancre cette feuille 4 à la périphérie de la cuvette 2, en construisant autour de cette dernière une margelle en béton armé 9 (voir fig. 5 et 6). On assure également l'étancheité au passage de la conduite 6a.

— On forme ensuite dans la cuvette 2, le radier 1. A cet effet, on coule d'abord du béton sur le fond et la paroi latérale de la cuvette 2 revêtue par la feuille d'étancheité 4. On moule ensuite l'entretoise centrale 1a puis le voile supérieur 1b du radier 1. Lors de cette opération, la cuvette 2 sert de coffrage.

— On obture provisoirement l'évidement central 7 qui entoure la conduite 6, au moyen d'un couvercle 10.

— Lorsque le béton du radier 1 a acquis une résistance suffisante, on introduit dans la conduite 6 de l'eau à une pression de quelques d'écimètres de hauteur d'eau. Sous l'effet de la poussée d'Archimède exercée par l'eau, le radier 1 est »décoffré« et flotte dans l'eau, comme indiqué sur la fig. 7. Ce décoffrage est facilité par le fait que le béton du radier 1 n'adhère pas au revêtement en matière plastique 4.

— La quantité d'eau introduite dans la cuvette 2 doit être suffisante pour permettre la flottation du radier 1.

— On fixe ensuite dans la partie centrale du radier 1 des galets 11 et 11a. Le galet 11 sert à l'entrainement en rotation de la maison, en prenant comme point fixe le tube 6a. Ce galet 11 a son axe parallèle à 1 axe X-X' et est relié à un groupe moto réducteur (non représenté) de faible puissance, permettant de faire tourner le radier 1 autour de l'axe de révolution X-X'. Les galets 11a (voir fig. 2) d'axe vertical ont pour effet de centrer le radier 1 par rapport au tube fixe 6a.

— On construit ensuite le reste de la maison sur le radier 1. Lors de cette construction, le poids appliqué sur le radier 1 augments progressivement, ce qui se traduit par un enfoncement progressif du radier 1 dans l'eau 5 de la cuvette 2. On introduit progressivement de l'eau dans la cuvette de façon à compenser par la poussée d'Archimède l'augmentation de poids de la maison.

Etant donné que l'ensemble de la maison flotte dans l'eau 5 contenue dans la cuvette 2, la surface du sol 3 adjacent à cette cuvette supporte une pression qui se réduit à celle exercée par l'eau. Cette pression est très faible devant celle qui serait exercée si l'ensemble de la maison reposait directement sur le sol 3. De plus, la pression exercée par l'eau est répartie de façon uniforme sur la surface du sol, de telle sorte que ce sol est préservé contre tour risque de déformation ou de tassements différentiels pouvant engendrer des fissures dans le gros-oeuvre de la maison.

Dans ces conditions, la maison peut être construite sur un sol de mauvaise qualité qui est incompatible avec les qualités requises normalement pour la construction de maisons avec des fondations traditionnelles.

L'exemple numérique ci-après donne les caractéristiques d'une maison construite selon le procédé conforme à l'invention.

Cette maison est construite sur une cuvette 2 présentant un diamètre maximum de 10 m. Cette maison a une surface habitable, y compris les combles aménagés, de 120 m2. Son poids total est de 45 000 da N (kilogrammes), y compris le radier 1. Cette maison flotte dans un volume d'eau de 7,5 m3, le radier 1 étant immergé dans cette eau sur une profondeur de 0,80 m. Entre le fond et la paroi latérale de la cuvette 2 et le radier 1, est ménagée une lame d'eau d'épaisseur égale à 0,10 m environ.

Dans ces conditions, la pression exercée sur le sol est réduite à 7000 pascals environ, ce qui est très faible.

Pour construire les murs 12 de la maison, il est avantageux d'utiliser des cadres préfabriqués et grillagés comportant un revêtement intérieur d'isolation thermique approprié. La surface extérieure grillagée de ces cadres est enduite de mortier pour constituer le mur proprement dit 12. Grâce au fait qu'il est possible de faire tourner la maison, la projection du mortier peut être réalisée à partir d'une machine fixe placée à l'extérieur de la maison. Cette opération peut être effectuée en continu, permet d'obtenir une parfaite régularité de revêtement, et procure un gain de temps considérable par rapport à une opération dans laquelle la machine à projeter est déplacée manuellement par rapport à la maison fixe.

Le gros-oeuvre de la maison étant terminé on pose les tuyauteries d'alimentation et d'évacuation d'eau ainsi que les cables électriques et téléphoniques nécessaires à la maison. Ces tuyauteries 13, 14 (voir fig. 7) sont flexibles afin d'être compatibles avec une rotation de la maison d'environ 180° autour de l'axe X-X' dans un sens et puis dans le sens inverse.

Dans la réalisation représentée sur les fig. 1 et 2, la maison porte sur l'une des faces de son toit 15 un capteur solaire 16. En faisant tourner l'ensemble de la maison, à une vitesse déterminée, entre une position A (voir fig. 2) où le capteur solaire 16 est dirigé vers le soleil levant, et une position B où le capteur 16 est orienté vers le soleil couchant, on obtient que ce capteur 16 soit constamment dirigé vers le soleil tout au long de la journée. On obtient ainsi un rende — ment optimum pour le fonctionnement du dispositif de chauffage solaire qui est associé au capteur 16. Pendant la nuit, on fait tourner la maison en sens inverse afin qu'au lever du soleil, cette maison occupe à nouveau la position A où le capteur 16 est orienté vers le soleil levant.

Lorsque la maison est équipée d'un tel dispositif de chauffage solaire, il est avantageux que le capteur solaire 16 soit relié à l'eau 5 contenue dans la cuvette 2, cette dernière constituant ainsi un réservoir d'accumulation de calories du dispositif de chauffage solaire en question. Cette cuvette 2 constitue en effet un réservoir d'accumulation de calories idéal car cette cuvette 2 est bien protégée à l'égard des déperditions de calories. De plus, le fait que le radier 1 soit en contact direct avec l'eau de cette cuvette 2 est favorable puisque dans ces conditions, le radier 1 peut constituer le cas échéant lui-même une surface chauffante pour l'intérieur de la maison.

Par ailleurs, puisque l'eau fait partie du système de chauffage solaire elle est totalement préservée contre les risques de gel.

Bien entendu, l'invention n'est pas limitée aux exemples que l'on vient de décrire et on peut apporter à ceux-ci de nombreuses modifications, sans sortir du cadre de l'invention.

Ainsi, la forme tronconique de la cuvette 2 n'est pas très critique, pourvu que cette forme puisse faciliter le démoulage du radier 1 et permettre de profiler la périphérie de la cuvette au talus naturel du terrain.

Par ailleurs, on peut introduire dans la cuvette 2 une quantité d'eau sensiblement supérieure à celle nécessaire pour permettre la flottation de la maison pour pouvoir disposer d'une réserve d'eau suffisante, lorsque la cuvette 2 sert en même temps de réservoir d'accumulation pour un dispositif de chauffage solaire.

Bien entendu, l'eau contenue dans la cuvette 2 peut être additionnée ou remplacée totalement par tout autre liquide compatible avec le matériau constituant le radier 1 et la feuille d'étanchéité 4. Cette dernière peut être fixée à la périphérie de la cuvette 2 par d'autres moyens qu'une margelle en béton.

**Revendications**

1. Procédé pour la construction d'une maison à assise hydraulique, selon lequel on creuse superficiellement dans le sol (3) une cuvette (2) pour recevoir le soubassement de cette maison, on applique sur la surface de cette cuvette (2) un revêtement étanche (4) et on coule directement dans la cuvette (2) ainsi revêtue, un radier (1) en béton armé destiné à constituer le soubassement de cette maison, caractérisé en ce qu'on construit le radier (1) sans l'aide d'aucun coffrage, la cuvette (2) étanche en tenant lieu, et on démoule ce radier (1) en introduisant de l'eau (5) dans le fond de la cuvette (2) en une quantité au moins suffisante pour faire flotter le radier (1), après quoi on construit les murs (12) et le reste de la maison sur ce radier (1).

2. Procédé conforme à la revendication 1, caractérisé en ce que lors de la construction de la maison, on ajoute de l'eau (5) dans la cuvette (2) en une quantité suffisante pour faire flotter l'ensemble de la maison.

3. Maison comportant un soubassement réalisé conformément au procédé prévu à la revendication 1, engagé dans une cuvette (2) creusée dans le sol (3) cette cuvette (2) comportant un revêtement étanche (4), caractérisé en ce que le soubassement de la maison est constitué par un radier (1) qui flotte dans de l'eau (5) introduite dans la cuvette (2) pour démouler le radier (1) en béton qui a été coulé directement dans la cuvette (2).

4. Maison conforme à la revendication 3, caractérisée en ce que la cuvette (2) comporte une conduite (6) d'admission d'eau.

5. Maison conforme à la revendication 4, caractérisée en ce que la cuvette (2) est tronconique.

6. Maison conforme à l'une quelconque des revendications 3 à 5, caractérisée en ce que le revêtement d'étanchéité (4) appliqué sur la surface de la cuvette (2) est une feuille de caoutchouc butyl.

7. Maison conforme à l'une quelconque des revendications 3 à 6, caractérisée en ce que le revêtement d'étanchéité (4) est ancré à la périphérie de la cuvette (2) par une margelle (9) en béton.

8. Maison conforme à l'une quelconque des revendications 3 ou 4, caractérisée en ce que le radier (1) est un corps creux en béton armé.

9. Maison conforme à l'une quelconque des revendications 3 à 8, équipée de capteurs solaires, caractérisée en ce que les capteurs solaires (16) sont reliés à l'eau (5) contenue dans la cuvette (2), cette dernière constituant le réservoir d'accumulation de calories du dispositif de chauffage solaire.

10. Maison conforme à l'une quelconque des revendications 4 à 9, caractérisée en ce que la conduite (6) d'admission d'eau débouche dans la cuvette (2) par le fond de cette dernière et dans l'axe de ce fond, l'extrémité (6a) de cette conduite (6) étant située à un niveau supérieur à celui de l'eau contenue dans la cuvette (2).

11. Maison conforme à la revendication 10, caractérisée en ce que cette conduite (6) reçoit les tuyauteries (13), (14) d'admission et d'évacuation d'eau ainsi que les câbles électriques nécessaires à la maison.

**Patentansprüche**

1. Verfahren zum Bauen eines hydraulisch gelagerten Hauses, nach welchem zur Aufnahme des Unterbaues eine Baugrube (2) aus der Bodenoberfläche (3) ausgehoben, eine wasserdichte Abdeckung (4) auf die Oberfläche dieser Baugrube (2) aufgebracht und eine Fundamentplatte (1) aus Stahlbeton, welche zur Bildung des Unterbaues dieses Hauses bestimmt ist, unmittelbar in die somit ausgekleidete Baugrube (2) vergossen wird, dadurch gekennzeichnet, daß die Fundamentplatte (1) ohne die Verwendung irgendeiner Schalung hergestellt wird, da diese letztere durch die wasserdichte Baugrube (2) ersetzt wird, und daß diese Fundamentplatte (1) ausgeschalt wird, indem auf dem Boden der Baugrube (2) Wasser (5) in einer Menge einleitet, die zumindest ausreicht, um die Fundamentplatte (1) zum Schwimmen zu bringen, worauf das Mauerwerk (12) und der Rest des Hauses auf dieser Fundamentplatte (1) errichtet werden.

2. Verfahren nach Anspruch 1, dadurch gekennzeichnet, daß bei der Errichtung des Hauses Wasser (5) in hinreichender Menge in die Baugrube (2) hinzugegeben wird, um die Gesamtheit des Hauses zum Schwimmen zu bringen.

3. Haus mit einem entsprechend dem Verfahren nach Anspruch 1 verwirklichten Unterbau, der in eine in den Boden (3) gegrabene und mit einer wasserdichten Auskleidung (4) versehenen Baugrube (2) eingefügt ist, dadurch gekennzeichnet, daß der Unterbau des Hauses von der Fundamentplatte (1) gebildet wird, die in dem zur Ausschalung der unmittelbar in die Baugrube (2) vergossenen Fundamentplatte (1) aus Beton in die Baugrube (2) eingeleiteten Wasser (5) schwimmt.

4. Haus nach Anspruch 3, dadurch gekennzeichnet, daß die Baugrube (2) eine Wasserleitung (6) umfaßt.

5. Haus nach Anspruch 4, dadurch gekennzeichnet, daß die Baugrube (2) eine Kegelstumpfform aufweist.

6. Haus nach einem der Ansprüche 3 bis 5, dadurch gekennzeichnet, daß die auf die Oberfläche der Baugrube (2) aufgebrachte Dichtungsverkleidung (4) aus einer Butylkautschukfolie besteht.

7. Haus nach einem der Ansprüche 3 bis 6, dadurch gekennzeichnet, daß die Dichtungsverkleidung (4) am Umfang der Baugrube (2) durch eine Einfassung (9) aus Beton verankert ist.

8. Haus nach einem der Ansprüche 3 oder 4, dadurch gekennzeichnet, daß die Fundamentplatte ein Hohlkörper aus Stahlbeton ist.

9. Haus nach einem der Ansprüche 3 bis 8, das mit Sonnenkollektoren ausgerüstet ist, dadurch gekennzeichnet, daß die Sonnenkollektoren (16) mit dem in der Baugrube (2) enthaltenen Wasser (5) verbunden sind, wobei die genannte Baugrube (2) den Kalorienstauspeicher der Solarheizungsanlage bildet.

10. Haus nach einem der Ansprüche 4 bis 9, dadurch gekennzeichnet, daß die Wasserleitung (6) in die Baugrube (2), durch den Boden dieser letzteren und in der Mitte dieses Bodens, mündet, wobei das Ende (6a) dieser Leitung (6) auf einem Niveau liegt, das den Wasserspiegel in der Baugrube (2) übersteigt.

11. Haus nach Anspruch 10, dadurch gekennzeichnet, daß diese Leitung (6) Rohrleitungen (13), (14) für die Wasserzuleitung und die Wasserableitung sowie die für das Haus erforderlichen Stromkabel aufnimmt.

**Claims**

1. A method for building a hydraulically supported house, according which a superficial head (2) is excavated into the ground (3) to receive the basement of such house. On the surface of this head (2) a waterproof coating (4) is applied and in this thus coated head (2) a floor (1) made out of reinforced concrete is casted, this floor (1) being intended to build on it the basement of such house, marked by the fact that the floor (1) is built without the help of any forming, as the waterproof head (2) is used as a form, and this floor (1) is taken out of the mould by introducing water (5) in the bottom of the head (2) in a quantity sufficent to have the floor (1) floatting, after which the walls (12) and the rest of the house are built on said floor (1).

2. A process similar to claim 1, characterized by the fact that, at the time of the building of such house, water (5) is added in the head (2) in a sufficient quantity to have the whole house floatting.

3. A house including a basement realised according to the process catered for in claim 1, jammed in a head (2) digged into the ground (3), such head (2) including a waterproof coating (4) characterised by the fact the the basement of the house is made out of a floor (1) which floats in water (5) that has been introduced into the head (2) to take the concrete floor (1) out of the mould, floor (1) which has been directly casted into the head (2).

4. A house similar to claim 3, characterized by the fact that the head (2) includes a water admission piping (6).

5. A house similar to claim 4, characterised by the fact that the head (2) is in the shape of a truncated cone.

6. A house similar to any of the claims 3 to 5, caracterized by the fact that the waterproof coating (4) applied on the surface of the head (2) is a sheet of butyl rubber.

7. A house similar to any of the claims 3 to 6, characterized by the fact that the waterproof coating (4) is anchored to the peripherie of the head (2) by means of a concrete cubstone.

8. A house similar to any of the claims 3 or 4, characterized by the fact that the floor (1) is a hollow body made out of reinforced concrete.

9. A house similar to any of the claims 3 to 8, equipped with solar captors characterized by the fact that the solar captors (16) are connected to the water (5) held in the head (2), the later thus building the calories accumulation tank of the solar heating system.

10. A house similar to any of the claims 3 to 9, characterized by the fact that water admission piping (6) arrives in the head (2) by the bottom of the later, and in the axis of such bottom, the end (6a) of such water admission piping (6) being located at an higher level thant the one of the water (5) held in the head (2).

11. A house similar to claim 10, characterized by the fact that this water admission piping (6) receives the water admission and draining tubes (13), (14), as well as the electrical wiring that are nessessary to the house.

FIG-1

0 041 462

FIG-2

FIG-3

FIG-4

FIG-5

FIG-6

FIG-7